# EUROPEAN PATENT SPECIFICATION

(11) **EP 4 056 438 B1**
(45) Date of publication and mention of the grant of the patent: **09.07.2025**
(21) Application number: 22159868.3
(22) Date of filing: 03.03.2022
(51) Int. Cl.: B60W 30/095, B60W 30/09, B60W 60/00

(54) **VEHICLE DRIVING SYSTEM AND CONTROL METHOD PERFORMED BY VEHICLE DRIVING SYSTEM**
FAHRZEUGANTRIEBSSYSTEM UND STEUERVERFAHREN FÜR EIN FAHRZEUGANTRIEBSSYSTEM
SYSTÈME D'ENTRAÎNEMENT DE VÉHICULE ET PROCÉDÉ DE COMMANDE EFFECTUÉ PAR UN SYSTÈME D'ENTRAÎNEMENT DE VÉHICULE

(30) Priority: 08.03.2021 KR 20210030093
(43) Date of publication of application: 14.09.2022
(73) Proprietor: Hyundai Mobis Co., Ltd., Gangnam-gu Seoul 06141 (KR)
(72) Inventor: KWON, Tae Min, Chungcheongnam-do 31982 (KR); KIM, Min Seok, Chungcheongnam-do 31996 (KR)
(74) Representative: Frenkel, Matthias Alexander

(56) References cited:
- EP-A1- 2 302 412
- US-A1- 2019 196 486
- US-A1- 2021 009 117

## Description

### BACKGROUND OF THE INVENTION

### 1. Field of the invention

The present invention relates to a system for enabling an autonomous vehicle to travel in narrow alleys and a method for controlling the same and, more specifically, to a vehicle driving system configured such that, when there is a traveling object traveling in the opposite direction in a narrow alley, the vehicle is driven safely so as not to collide with the traveling object, and even an inexperienced driver is enabled to travel safely in a congested alley crowded with parked vehicles or obstacles.

### 2. Description of the Prior Art

There has recently been ongoing development regarding autonomous driving technologies for minimizing driver intervention, including ADAS systems for assisting drivers' driving. Autonomous driving technologies have a problem in that the same are easy to implement if the driving environment can be clearly recognized, and if there is sufficient peripheral space (for example, in the case of wide roads having clearly defined lanes), but the same are implemented in a limited manner in the case of narrow roads (for example, alleys), requiring manual manipulation by the drivers, and inexperienced drivers who have insufficient judgement regarding vehicle widths cause accidents frequently.

US 2019/196486 A1 discloses a vehicle control device including a first recognizer recognizing one or more other vehicles present in the vicinity of a subject vehicle, a second recognizer recognizing that a road on which the subject vehicle is running is a road having no center line, an estimator estimating a state of a driver of an oncoming vehicle facing the subject vehicle among the one or more other vehicles recognized by the first recognizer, a
determiner determining whether the oncoming vehicle is a vehicle executing manual driving, and a controller decelerating the subject vehicle to a speed equal to or lower than a predetermined speed on the basis of the state of the driver of the oncoming vehicle in a case in which the oncoming vehicle is a vehicle executing manual driving, and the road on which the subject vehicle is running is a road having no center line.

### SUMMARY OF THE INVENTION

The invention is defined by the appended claims.

The present invention is advantageous in that it is possible to travel on a narrow road regardless of whether the same has lanes or not, and even if there are obstacles (for example, parked vehicles) on the narrow road, it is possible to safely travel while avoiding the same. In addition, even an inexperienced driver can safely travel in a narrow and congested road environment.

### BRIEF DESCRIPTION OF THE DRAWINGS

The above and other aspects, features, and advantages of the present invention will be more apparent from the following detailed description taken in conjunction with the accompanying drawings, in which:
FIG. 1 illustrates a configuration of a vehicle driving system of the present invention;
FIGS. 2 to 10 are views provided for helping to understand the present invention; and
FIG. 11 is a flowchart illustrating a system control method of the present invention.

### DETAILED DESCRIPTION OF THE EXEMPLARY EMBODIMENTS

Hereinafter, the present invention will be described in detail.

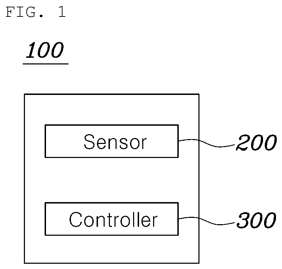

FIG. 1 illustrates a configuration of a vehicle driving system 100 of the present invention. The vehicle driving system according to the present invention includes: a sensor 200 configured to monitor an environment outside a vehicle; and a controller 300 configured to recognize an oncoming traveling object through the sensor 200, derive the width of a travelable road between the traveling object and the vehicle, determine priority between the traveling object and the vehicle when the width of the travelable road is smaller than the sum of the widths of the traveling object and the vehicle, and, when it is determined that the traveling object has priority, control traveling of the vehicle such that a space through which the traveling object can pass is ensured in the lateral direction of the vehicle.

Specifically, the present invention relates to a traveling system for controlling traveling of a vehicle on a narrow road, in particular, a narrow road on which two vehicles traveling in different directions cannot simultaneously travel due to parked vehicles or other obstacles on the narrow road.

The sensor 200 (e.g., an ultrasonic sensor, a radar, a LiDAR, a camera, etc.), which is an element for the system, monitors an environment outside the vehicle. Specifically, the sensor 200 may monitor whether there is a traveling object (e.g., an oncoming vehicle, a bicycle, etc.) in front of the vehicle, whether there is a lane around the vehicle, or whether there is an obstacle (e.g., a parked or stopped vehicle, etc.) around the vehicle.

When it is determined, based on the outside environment by the sensor 200, that there is a traveling object in front of the vehicle, the controller 300 sums the transverse width of the traveling object in front of the vehicle and the transverse width of the vehicle, compares the sum with the transverse width of a travelable road, and then determines priority regarding which of the traveling object and the vehicle can first pass through the travelable road.

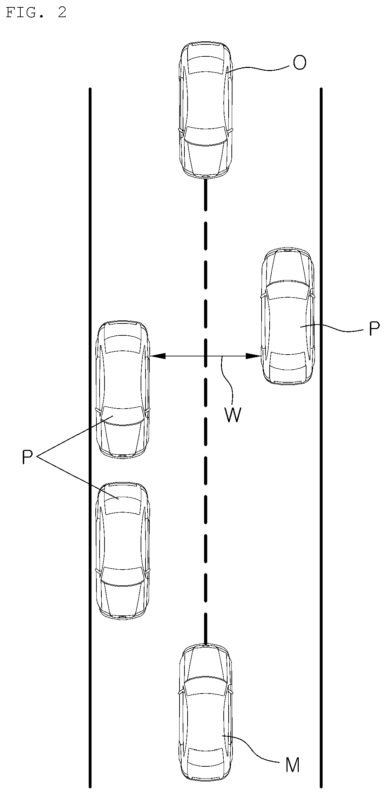

FIG. 2 is a view provided for helping to understand the present invention. Three parked or stopped vehicles P are on a road, and a traveling object O and a vehicle M have different traveling directions. The traveling object O and the vehicle M need to travel while passing through a space between the parked or stopped vehicles, and the space between the parked or stopped vehicles becomes a travelable road. Since the traveling object has been recognized by the sensor 200, the controller 300 sums the transverse width of the traveling object O and the transverse width of the vehicle M, and then compares the sum with the width W of the travelable road. In FIG. 2, the width W of the travelable road is smaller than the sum of the transverse widths of the traveling object O and the vehicle M, and thus the traveling object and the vehicle cannot simultaneously travel on the travelable road. Therefore, subsequently, the controller 300 prioritizes the traveling object O and the vehicle M to determine which of the traveling object O and the vehicle M is given priority to travel on the travelable road and which of the traveling object O and the vehicle M needs to yield. For example, when the traveling object O is determined to have priority, the controller 300 may control traveling of the vehicle M to provide a space such that the traveling object O can safely pass by the vehicle M.

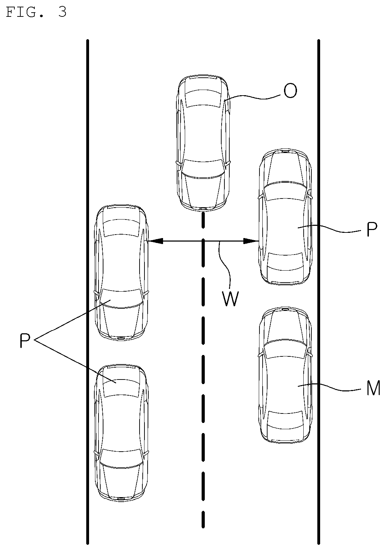

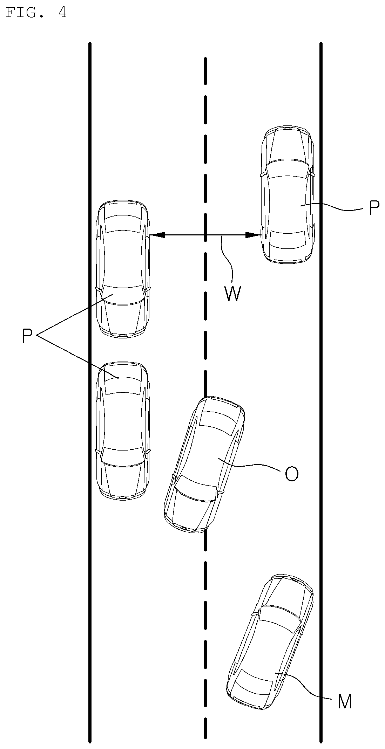

At this time, the vehicle M may be controlled to make way for the traveling object O, and, for example, as illustrated in FIGS. 3 and 4, may be controlled to provide a traveling space to the traveling object O.

Specific control to determine which of the vehicle M and the traveling object O has priority is as follows.

The controller 300 may derive an expected collision site (S) of the vehicle M and the traveling object O, and may determine that one of the vehicle M and the traveling object O, which requires a less time to reach the expected collision site (S), has priority over the other.

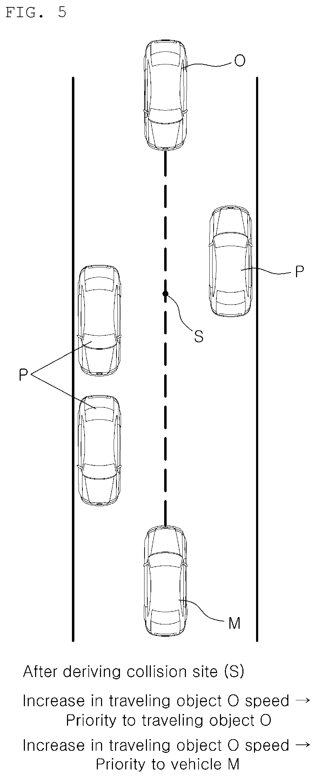

Specifically, the controller 300 may derive the expected collision site (S) through the speeds of the vehicle M and the traveling object O and the distance therebetween. When the collision site (S) is derived, the controller 300 fixes the collision site, and determines which of the vehicle M and the traveling object O will reach the collision site (S) first, that is, which of the vehicle M and the traveling object O requires a less time to reach the collision site (S). For example, referring to FIG. 5, after the collision site (S) is derived, when the speed of the vehicle M is not changed and when the speed of the traveling object O increases, the traveling object O first reaches the collision site (S). Therefore, it is determined that the traveling object O has priority. On the contrary, after the collision site (S) is derived, when the speed of the vehicle M is not changed and when the speed of the traveling object O decreases, the vehicle M first reaches the collision site (S). Therefore, it is determined that the vehicle M has priority.

The controller 300 may derive a time to collision (TTC) between the vehicle M and the traveling object O, and when the TTC is less than a reference value, may determine that one of the vehicle M and the traveling object O, which has a higher speed or higher acceleration, has priority.

Specifically, the controller 300 may derive an expected collision time, that is, the time that remains until collision therebetween, through the speeds of the vehicle M and the traveling object O and the distance therebetween. At this time, the controller 300 derives a TTC, and then, when the TTC is less than the reference value, may determine that the vehicle M and the traveling object O are in danger of colliding with each other on a travelable road, and may determine that one of the vehicle M and the traveling object O, which has a higher speed or higher acceleration, has priority. If the TTC is greater than the reference value, much time remains until collision, and thus the vehicle M and the traveling object O are considered to have a much time to avoid each other, whereby the vehicle M may speed up and first pass through travelable road.

The controller 300 may derive an expected collision site (S) of the vehicle M and the traveling object O, and may determine that one of the vehicle M and the traveling object O, which first passes through any one of two sites (S') spaced a predetermined distance apart from the expected collision site (S) and facing each other, has priority.

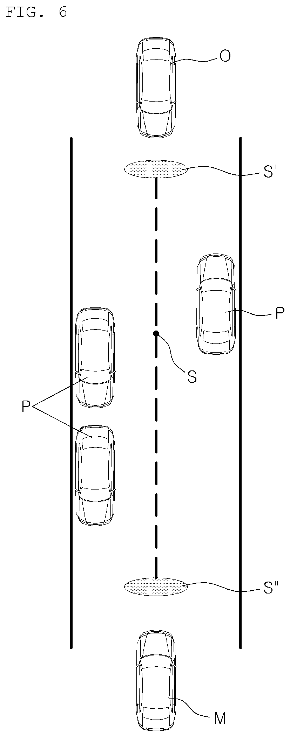

Specifically, referring to FIG. 6, the controller 300 may derive an expected collision site (S) through the speeds of the vehicle M and the traveling object O and the distance therebetween. When the collision site (S) is derived, the controller 300 may fix the collision site (S), may configure two imaginary sites (S') spaced the same distance apart from the collision site (S) interposed therebetween, and may determine that one of the vehicle M and the traveling object O, which first passes through any one of the two sites (S'), has priority. For example, when the traveling object O first passes through an imaginary site (S'), the traveling object O has priority, and when the vehicle M first passes through an imaginary site (S'), the vehicle M has priority.

When the traveling object O is recognized as having an intention to travel, the controller 300 may determine that the traveling object O has priority.

When the vehicle driving system 100 of the present invention is included in both the vehicle M and the traveling object O, the vehicle M and the traveling object O can travel on a narrow road even under the above condition. However, if the traveling object O does not include the vehicle driving system 100, even when it is determined that the vehicle M has priority, the vehicle M and the traveling object O are in danger of colliding with each other provided that the traveling object O has an intention to travel. Thus, in this case, the traveling object O may be considered to have priority.

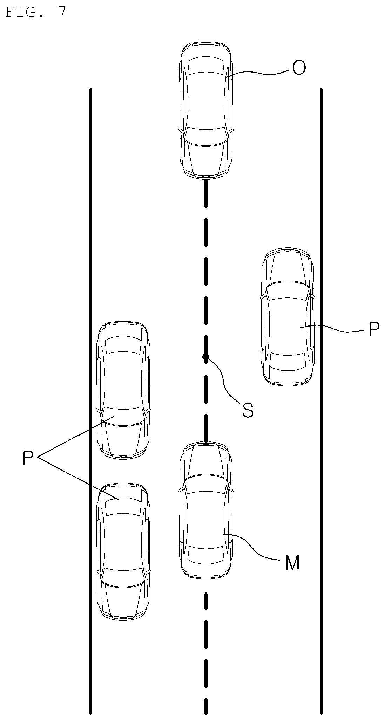

Specifically, when the traveling object O does not decelerate, the controller 300 may recognize the traveling object O as having an intention to travel. Referring to FIG. 7, in a situation in which the vehicle M has been determined to have priority, when the traveling object O does not decelerate, the controller 300 may consider the traveling object O to have an intention to travel, and may re-determine that the traveling object O has priority.

Further, when the rate of change in a forward heading angle of the traveling object O is less than a reference value, the controller 300 may recognize the traveling object O as having an intention to travel.

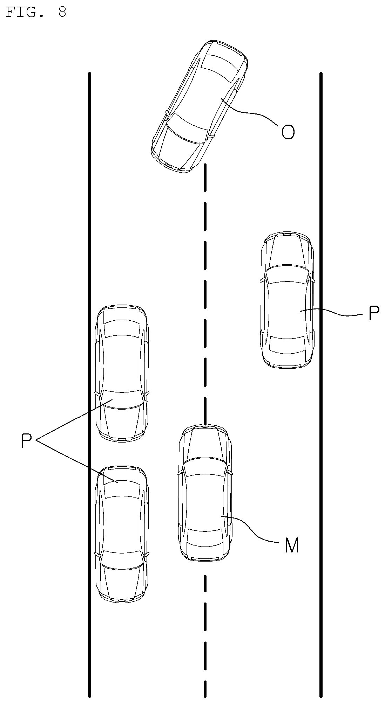

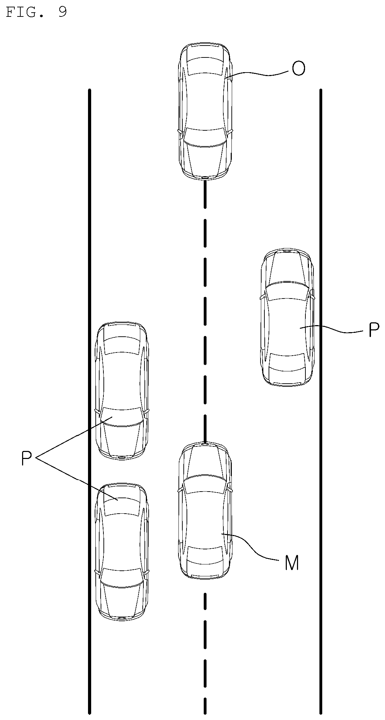

Specifically, referring to FIG. 8 and FIG. 9, in the situation in which the vehicle M has been determined to have priority, the traveling object O needs to change the traveling direction thereof in order to avoid the vehicle. Therefore, if the traveling object O has an intention to yield, the heading angle is changed as illustrated in FIG. 8. However, if the traveling object O has no intention to yield, the heading angle is not changed even while the traveling object O travels as illustrated in FIG. 9. Therefore, when the rate of change in the heading angle of the traveling object O is less than the reference value, the controller 300 may re-determine that the traveling object O has an intention to travel and the traveling object O has priority.

In a situation in which the vehicle M and the traveling object O stop, when the traveling object O does not make way for a predetermined time, the traveling object O may be recognized as having an intention to travel.

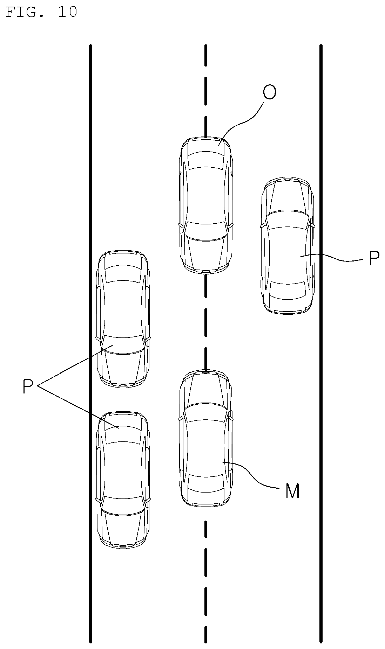

Specifically, referring to FIG. 10, in a situation in which the vehicle M has been determined to have priority, the traveling object O needs to yield to the vehicle such that the vehicle can pass. In a situation in which both the traveling object O and the vehicle M stop, the controller 300 controls the vehicle M such that the vehicle M stands by for a predetermined time. When the traveling object does not make way for a predetermined time, the controller 300 may determine that the traveling object O has an intention to travel, and may re-determine that the traveling object O has priority, whereby the vehicle M may travel backward on a traveling path to make way for the traveling object O.

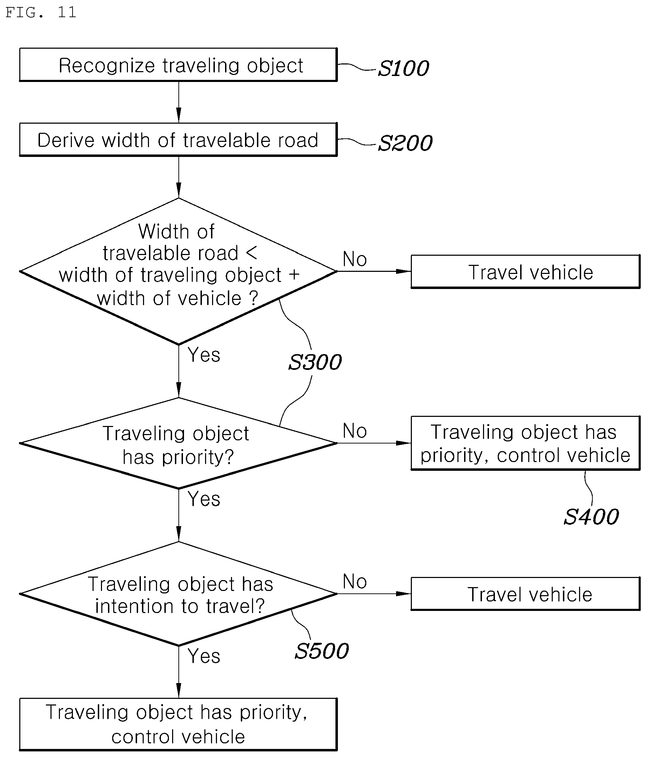

Referring to FIG. 11, a method for controlling the vehicle driving system includes: a step S100 of recognizing an oncoming traveling object through a sensor; a step S200 of deriving the width of a travelable road between the traveling object and a vehicle; a step of S300 of determining priority between the traveling object and the vehicle when the width of the travelable road is smaller than the sum of the widths of the traveling object and the vehicle; and a step S400 of controlling, when the traveling object is determined to have priority, traveling of the vehicle such that a space through which the traveling object can pass is ensured in the lateral direction of the vehicle.

In the step S300 of determining priority, an expected collision site of the vehicle and the traveling object may be derived, and one of the vehicle and the traveling object, which requires a less time to reach the expected collision site, may be determined to have priority.

For example, when the traveling object requires the less time to reach the expected collision site, the traveling object may be determined to have priority, and the traveling of the vehicle may be controlled such that the traveling object can pass through a travelable road.

After the step S300 of determining priority, the method may further include a step S500 of determining whether the traveling object has an intention to travel, and it may be determined that the traveling object has priority when the traveling object is recognized as having an intention to travel.

For example, even when the vehicle has been determined to have priority, if the traveling object is determined to have an intention to travel, the traveling of the vehicle may be controlled such that the traveling object can first pass through the travelable road.

The controller 300 may include a processor or a microprocessor. Optionally, the controller 300 may also include a memory. The aforementioned operations/functions of the controller 300 can be embodied as computer readable code/algorithm/software stored on the memory thereof which may include a non-transitory computer readable recording medium. The non-transitory computer readable recording medium is any data storage device that can store data which can thereafter be read by the processor or the microprocessor. Examples of the computer readable recording medium include a hard disk drive (HDD), a solid state drive (SSD), a silicon disc drive (SDD), read-only memory (ROM), random-access memory (RAM), CD-ROM, magnetic tapes, floppy disks, optical data storage devices, etc. The processor or the microprocessor may perform the above described operations/functions of the controller 300, by executing the computer readable code/algorithm/software stored on the non-transitory computer readable recording medium.

According to a vehicle driving system and a method for controlling the same in the present invention, it is possible for an unskilled driver to easily pass through a narrow road and perform safe traveling even in a busy and narrow road environment. Further, when there is an oncoming traveling object, it is possible to travel while safely avoiding the same.

## Claims

1. A vehicle driving system (100) comprising:
a sensor (200) configured to monitor an environment outside a vehicle; and
a controller (300) configured to recognize an oncoming traveling object through the sensor, derive a width of a travelable road between the traveling object and the vehicle, determine priority between the traveling object and the vehicle when the width of the travelable road is smaller than a sum of widths of the traveling object and the vehicle, and, when the traveling object is determined to have the priority, control traveling of the vehicle to provide a space in a lateral direction of the vehicle to allow the traveling object to pass,
wherein the controller (300) is configured to derive an expected collision site of the vehicle and the traveling object, and determine that one of the vehicle and the traveling object, which requires a less time to reach the expected collision site, has the priority, or
wherein the controller (300) is configured to derive a time to collision, TTC, between the vehicle and the traveling object, and when the TTC is less than a reference value, determine that one of the vehicle and the traveling object, which has a higher speed or higher acceleration, has the priority, or
wherein the controller (300) is configured to derive an expected collision site of the vehicle and the traveling object, and determine that one of the vehicle and the traveling object, which first passes through one of two sites spaced a predetermined distance apart from the expected collision site and facing each other, has the priority.

2. The vehicle driving system (100) of claim 1, wherein, after the controller (300) determines the priority, the controller (300) is configured to further determine that the traveling object has the priority when the traveling object is recognized as having an intention to travel.

3. The vehicle driving system (100) of claim 2, wherein the controller (300) is further configured to recognize, when the traveling object does not decelerate, the traveling object as having an intention to travel.

4. The vehicle driving system of claim 2 or 3, wherein the controller is configured to recognize the traveling object as having an intention to travel, when a rate of change in a forward heading angle of the traveling object is less than a reference value.

5. The vehicle driving system (100) of any one of claims 2 to 4, wherein the controller (300) is further configured to recognize the traveling object as having an intention to travel, when the traveling object does not make way for a predetermined time in a situation in which the vehicle and the traveling object stop.

6. A method performed by a vehicle driving system for controlling a vehicle, the method comprising:
recognizing (S100), by a sensor, an oncoming traveling object;
deriving (S200), by a controller, a width of a travelable road between the traveling object and a vehicle;
determining (S300), by the controller, priority between the traveling object and the vehicle when the width of the travelable road is smaller than a sum of widths of the traveling object and the vehicle; and
controlling (S400), by the controller, when the traveling object is determined to have the priority, traveling of the vehicle to provide a space in a lateral direction of the vehicle to allow the traveling object to pass,
wherein the method comprises, in the determining (S300) of priority:
deriving an expected collision site of the vehicle and the traveling object, and determining that one of the vehicle and the traveling object, which requires a less time to reach the expected collision site, has the priority, or
deriving a time to collision, TTC, between the vehicle and the traveling object, and when the TTC is less than a reference value, determining that one of the vehicle and the traveling object, which has a higher speed or higher acceleration, has the priority, or
deriving an expected collision site of the vehicle and the traveling object, and determining that one of the vehicle and the traveling object, which first passes through one of two sites spaced a predetermined distance apart from the expected collision site and facing each other, has the priority.

7. The method of claim 6, further comprising, after the determining (S300) of priority, determining (S500), by a controller, whether the traveling object has an intention to travel,
wherein the traveling object is determined to have the priority when the traveling object is recognized as having an intention to travel.

## Patentansprüche

1. Fahrzeugantriebssystem (100) umfassend:
einen Sensor (200), der dazu eingerichtet ist, eine Umgebung außerhalb eines Fahrzeugs zu überwachen; und
eine Steuerung (300), die dazu eingerichtet ist, ein entgegenkommendes fahrendes Objekt durch den Sensor zu erkennen, eine Breite einer befahrbaren Straße zwischen dem fahrenden Objekt und dem Fahrzeug abzuleiten, eine Vorfahrt zwischen dem fahrenden Objekt und dem Fahrzeug zu bestimmen, wenn die Breite der befahrbaren Straße kleiner ist als eine Summe von Breiten des fahrenden Objekts und des Fahrzeugs, und, wenn bestimmt wird, dass das fahrende Objekt die Vorfahrt hat, eine Fahrt des Fahrzeugs zu steuern, um in einer seitlichen Richtung des Fahrzeugs einen Platz zu schaffen, damit das fahrende Objekt passieren kann,
wobei die Steuerung (300) dazu eingerichtet ist, eine erwartete Kollisionsstelle des Fahrzeugs und des fahrenden Objekts abzuleiten und zu bestimmen, dass eines von dem Fahrzeug und dem fahrenden Objekt, das weniger Zeit benötigt, um die erwartete Kollisionsstelle zu erreichen, die Vorfahrt hat, oder
wobei die Steuerung (300) dazu eingerichtet ist, eine Zeit bis zur Kollision, TTC, zwischen dem Fahrzeug und dem fahrenden Objekt abzuleiten und, wenn die TTC kleiner als ein Referenzwert ist, zu bestimmen, dass eines von dem Fahrzeug und dem fahrenden Objekt, das eine höhere Geschwindigkeit oder eine höhere Beschleunigung aufweist, die Vorfahrt hat, oder
wobei die Steuerung (300) dazu eingerichtet ist, eine erwartete Kollisionsstelle des Fahrzeugs und des fahrenden Objekts abzuleiten und zu bestimmen, dass eines des Fahrzeugs und des fahrenden Objekts, das zuerst eine von zwei Stellen passiert, die in einem vorbestimmten Abstand von der erwarteten Kollisionsstelle beabstandet sind und einander zugewandt sind, die Vorfahrt hat.

2. Fahrzeugantriebssystem (100) nach Anspruch 1, wobei, nachdem die Steuerung (300) die Vorfahrt bestimmt, die Steuerung (300) dazu eingerichtet ist, weiterhin zu bestimmen, dass das fahrende Objekt die Vorfahrt hat, wenn erkannt wird, dass das fahrende Objekt eine Absicht hat, zu fahren.

3. Fahrzeugantriebssystem (100) nach Anspruch 2, wobei die Steuerung (300) weiterhin dazu eingerichtet ist, zu erkennen, dass das fahrende Objekt eine Absicht hat, zu fahren, wenn das fahrende Objekt nicht verzögert.

4. Fahrzeugantriebssystem nach Anspruch 2 oder 3, wobei die Steuerung dazu eingerichtet ist, zu erkennen, dass das fahrende Objekt eine Absicht hat, zu fahren, wenn eine Änderungsrate eines Vorwärtskurswinkels des fahrenden Objekts kleiner als ein Referenzwert ist.

5. Fahrzeugantriebssystem (100) nach einem der Ansprüche 2 bis 4, wobei die Steuerung (300) weiterhin dazu eingerichtet ist, zu erkennen, dass das fahrende Objekt eine Absicht hat, zu fahren, wenn das fahrende Objekt in einer Situation, in der das Fahrzeug und das fahrende Objekt anhalten, für eine vorbestimmte Zeit nicht Platz macht.

6. Verfahren zur Steuerung eines Fahrzeugs, das von einem Fahrzeugantriebssystem durchgeführt wird, wobei das Verfahren umfasst:
Erkennen (S100) eines entgegenkommenden fahrenden Objekts durch einen Sensor;
Ableiten (S200) einer Breite einer befahrbaren Straße zwischen dem fahrenden Objekt und einem Fahrzeug durch eine Steuerung;
Bestimmen (S300) einer Vorfahrt zwischen dem fahrenden Objekt und dem Fahrzeug durch die Steuerung, wenn die Breite der befahrbaren Straße kleiner ist als eine Summe von Breiten des fahrenden Objekts und des Fahrzeugs; und
Steuern (S400) einer Fahrt des Fahrzeugs durch die Steuerung, wenn bestimmt wird, dass das fahrende Objekt die Vorfahrt hat, um in einer seitlichen Richtung des Fahrzeugs Platz zu schaffen, damit das fahrende Objekt passieren kann,
wobei das Verfahren beim Bestimmen (S300) der Vorfahrt umfasst:
Ableiten einer erwarteten Kollisionsstelle des Fahrzeugs und des fahrenden Objekts und Bestimmen, dass eines von dem Fahrzeug und dem fahrenden Objekt, das weniger Zeit benötigt, um die erwartete Kollisionsstelle zu erreichen, die Vorfahrt hat, oder
Ableiten einer Zeit bis zur Kollision, TTC, zwischen dem Fahrzeug und dem fahrenden Objekt und, wenn die TTC kleiner als ein Referenzwert ist, Bestimmen, dass eines von dem Fahrzeug und dem fahrenden Objekt, das eine höhere Geschwindigkeit oder eine höhere Beschleunigung aufweist, die Vorfahrt hat, oder
Ableiten einer erwarteten Kollisionsstelle des Fahrzeugs und des fahrenden Objekts und Bestimmen, dass eines von dem Fahrzeug und dem fahrenden Objekt, das zuerst eine von zwei Stellen passiert, die in einem vorbestimmten Abstand von der erwarteten Kollisionsstelle beabstandet sind und einander zugewandt sind, die Vorfahrt hat.

7. Verfahren nach Anspruch 6, weiterhin umfassend Bestimmen (S500), ob das fahrende Objekt eine Absicht hat, zu fahren, durch eine Steuerung nach dem Bestimmen (S300) einer Vorfahrt,
wobei bestimmt wird, dass das fahrende Objekt die Vorfahrt hat, wenn erkannt wird, dass das fahrende Objekt eine Absicht hat, zu fahren.

## Revendications

1. Système de conduite de véhicule (100) comprenant:
un capteur (200) conçu pour surveiller un environnement à l'extérieur d'un véhicule; et
un dispositif de commande (300) conçu pour reconnaître un objet mobile venant en sens inverse au moyen du capteur, calculer la largeur d'une route praticable entre l'objet mobile et le véhicule, déterminer la priorité entre l'objet mobile et le véhicule lorsque la largeur de la route praticable est inférieure à la somme des largeurs de l'objet mobile et du véhicule, et, lorsqu'il est déterminé que l'objet mobile a la priorité, commander le déplacement du véhicule afin d'assurer un espace suffisant latéralement au véhicule pour permettre à l'objet mobile de passer,
dans lequel le dispositif de commande (201) est configuré pour déduire un point de collision prévu entre le véhicule et l'objet mobile, et déterminer que l'un du véhicule et de l'objet mobile, qui nécessite moins de temps pour atteindre le site de collision prévu, a la priorité, ou
dans lequel le dispositif de commande (300) est configuré pour calculer un temps avant collision, TTC, entre le véhicule et l'objet en mouvement, et lorsque le TTC est inférieur à une valeur de référence, déterminer que l'un du véhicule et de l'objet en mouvement, qui a une vitesse plus élevée ou une accélération plus élevée, a la priorité, ou
dans lequel le dispositif de commande (300) est configuré pour déduire un site de collision prévu pour le véhicule et l'objet mobile, et déterminer que l'un parmi le véhicule et l'objet mobile, qui passe d'abord par l'un des deux sites à une distance prédéterminée du site de collision prévu et faisant face à l'autre, a la priorité.

2. Système de conduite de véhicule (100) selon la revendication 1, dans lequel, après que le dispositif de commande (300) a déterminé la priorité, le dispositif de commande (300) est configuré pour déterminer en outre que l'objet mobile a la priorité lorsque l'objet mobile est reconnu comme ayant l'intention de se déplacer.

3. Système de conduite de véhicule (100) selon la revendication 2, dans laquelle le dispositif de commande(300) est en outre configuré pour reconnaître, lorsque l'objet mobile ne décélère pas, que l'objet mobile a l'intention de se déplacer.

4. Système de conduite de véhicule (100) selon la revendication 2 ou 3, dans lequel le dispositif de commande est configuré pour identifier que l'objet mobile a l'intention de se déplacer, lorsqu'une vitesse de changement d'un angle de cap avant de l'objet mobile est inférieure à une valeur de référence.

5. Système de conduite de véhicule (100) selon l'une quelconque des revendications 2 à 4, dans lequel le dispositif de commande (300) est en outre configuré pour identifier que l'objet mobile a l'intention de se déplacer, lorsque l'objet mobile ne fait pas de place pendant un temps prédéterminé dans une situation où le véhicule et l'objet mobile s'arrêtent.

6. Procédé exécuté par un système de conduite de véhicule destiné à conduire un véhicule, le procédé comprenant:
la reconnaissance (S100), à l'aide d'un capteur, d'un objet mobile arrivant en sens inverse;
le calcul (S200), par un dispositif de commande, de la largeur d'une route praticable entre l'objet mobile et un véhicule;
la détermination (S300), par le dispositif de commande, de la priorité entre l'objet mobile et le véhicule lorsque la largeur de la route praticable est inférieure à la somme des largeurs de l'objet mobile et du véhicule; et
la commande (S400), par le dispositif de commande, lorsque l'objet mobile est déterminé comme ayant la priorité, du déplacement du véhicule afin d'assurer un espace suffisant latéralement au véhicule pour permettre à l'objet mobile de passer,
dans lequel le procédé comprend, dans la détermination (S300) de la priorité:
la détermination d'un lieu de collision prévu entre le véhicule et l'objet mobile et la détermination que l'un parmi le véhicule et l'objet mobile, qui nécessite moins de temps pour atteindre le lieu de collision prévu, a la priorité, ou
le calcul d'un temps avant collision, TTC, entre le véhicule et l'objet mobile, et lorsque le TTC est inférieur à une valeur de référence, la détermination que l'un parmi le véhicule et l'objet mobile, dont la vitesse est plus élevée ou dont l'accélération plus élevée, a la priorité, ou
le calcul d'un lieu de collision prévu pour le véhicule et l'objet mobile, et la détermination que l'un parmi le véhicule et l'objet mobile, qui passe d'abord par l'un des deux sites à une distance prédéterminée du site de collision prévu et faisant face à l'autre, a la priorité.

7. Procédé selon la revendication 6, comprenant en outre, après la détermination (S300) de la priorité, la détermination (S500), par un dispositif de commande, si l'objet mobile a l'intention de se déplacer,
dans lequel l'objet mobile est considéré comme prioritaire lorsque l'objet mobile est identifié comme ayant l'intention de se déplacer.
